# EUROPEAN PATENT APPLICATION

(11) **EP 1 679 349 A1**
(43) Date of publication of application: **12.07.2006**
(21) Application number: 04793330.4
(22) Date of filing: 28.10.2004
(51) Int. Cl.: C08L 101/00, C08F 16/12, C08G 18/00, C08G 63/00, C08G 65/00, C08L 29/10, C08L 67/00, C08L 71/00, C08L 75/04

(54) **RESIN COMPOSITION**

(30) Priority: 29.10.2003 JP 2003368611
(71) Applicant: Kyowa Hakko Chemical Co., Ltd., Tokyo 103-0022 (JP)
(72) Inventor: KODAMA, Sai c/o Kyowa Hakko Chemical Co., Ltd., Mie 510-8502 (JP); INAYAMA, Toshihiro Kyowa Hakko Chemical Co., Ltd., Chuoku, Tokyo 103-0022 (JP); MURATA, Shigeru c/o Kyowa Hakko Chemical Co., Ltd., Mie 510-8502 (JP)
(74) Representative: Casalonga, Axel
(86) International application number: PCT/JP2004/016350
(87) International publication number: WO 2005/040282

(57) **Abstract**

The present invention provides a resin composition comprising a thermoplastic resin and a polymer having, in the molecule, a structural unit represented by Formula (I): 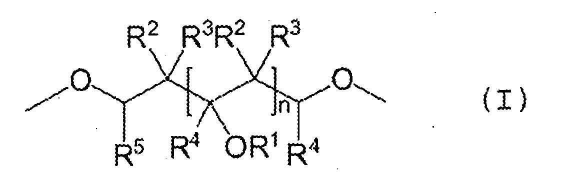 (wherein n represents an integer of 2 to 1000; R¹ represents a substituted or unsubstituted lower alkyl, a substituted or unsubstituted cycloalkyl, a substituted or unsubstituted aryl, or a substituted or unsubstituted aralkyl; and R², R³, R⁴, and R⁵ are the same or different from one another and each represent a hydrogen atom, a substituted or unsubstituted lower alkyl, a substituted or unsubstituted cycloalkyl, a substituted or unsubstituted aryl, or a substituted or unsubstituted aralkyl, and when each of R¹s, R²s, R³s, and R⁴s, represent two or more in number, they may be the same or different from each other, respectively) or the like.

## Description

### Technical Field

The present invention relates to resin compositions useful for applications such as sheets, films, plates, tubular molded articles, packaging plastics, hoses, wire coverings, food trays, food containers, and injection-molded articles.

### Background Art

As methods for softening thermoplastic resins, blending of thermoplastic resins with a plasticizer and/or a flexible resin have been conventionally known.

For example, to soften poly(lactic acid)s that are poor in flexibility and the like, a method in which a cyclic oligomer of lactic acid as a plasticizer is added to poly(lactic acid)s or copolymers of lactic acid with other hydroxycarboxylic acid(s) (see, for example, Japanese Published Unexamined Patent Application No. 306264/1994)has been known, and to soften L-lactide/D,L-lactide copolymers, a method in which glycerol triacetate as a plasticizer is added to the copolymers (see, for example, U.S. Patent No. 3636956) has been known. The resulting compositions obtained according to any of these methods, however, often invite problems such as bleeding and fogging and are susceptible to improvement typically in heat resistance.

Apart from these, a softening agent for thermoplastic resins which has a polyvinyl ether structure (see, for example, Japanese Published Unexamined Patent Application No. 138140/2003) has been known. Although they are excellent in optical transparency, compositions containing the disclosed softening agent are still susceptible to improvement typically in elongation.

### Disclosure of Invention

The present invention provides the following [1] to [10].
[1] A resin composition comprising a thermoplastic resin and a polymer having, in the molecule, a structural unit represented by Formula (I): 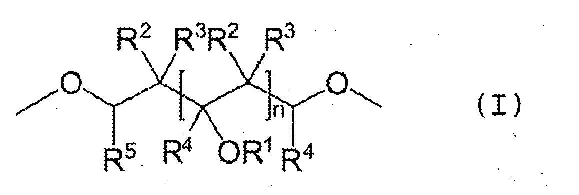 (wherein n represents an integer of 2 to 1000; R¹ represents a substituted or unsubstituted lower alkyl, a substituted or unsubstituted cycloalkyl, a substituted or unsubstituted aryl, or a substituted or unsubstituted aralkyl; and R², R³, R⁴, and R⁵ are the same or different from one another and each represent a hydrogen atom, a substituted or unsubstituted lower alkyl, a substituted or unsubstituted cycloalkyl, a substituted or unsubstituted aryl, or a substituted or unsubstituted aralkyl, and when each of R¹s, R²s, R³s, and R⁴s, represent two or more in number, they may be the same or different from each other, respectively).
[2] The resin composition according to above [1], wherein the polymer having the structural unit represented by Formula (I) comprises two to four terminal hydroxyl groups and has a number-average molecular weight of 300 to 50,000.
[3] A resin composition comprising a thermoplastic resin and a polyurethane having, in the molecule, a structural unit represented by Formula (II): 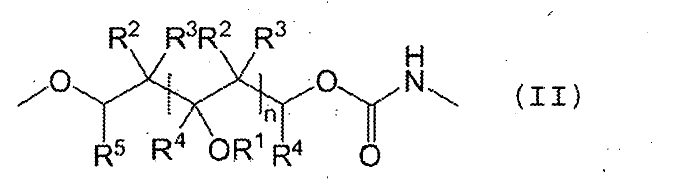 (wherein n, R¹, R², R³, R⁴, and R⁵ are as defined above, respectively).
[4] The resin composition according to [3], wherein the polyurethane having, in the molecule, the structural unit represented by Formula (II) has a weight-average molecular weight of 1,000 to 50,000,000.
[5] A resin composition comprising a thermoplastic resin and a polyester having, in the molecule, a structural unit represented by Formula (III): 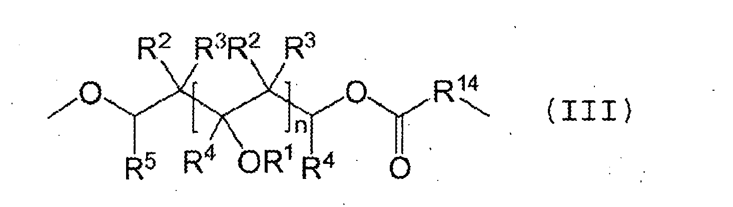 (wherein n, R¹, R², R³, R⁴, and R⁵ are as defined above, respectively; and R¹⁴ represents a substituted or unsubstituted lower alkylene, a substituted or unsubstituted cycloalkylene, or a substituted or unsubstituted arylene).
[6] The resin composition according to [5], wherein the polyester having, in the molecule, the structural unit represented by Formula (III) has a weight-average molecular weight of 1,000 to 50,000,000.
[7] The resin composition according to any one of [1] to [6], wherein the thermoplastic resin is a poly(lactic acid).
[8] A softening agent for thermoplastic resins comprising a polymer having, in the molecule, a structural unit represented by Formula (I): 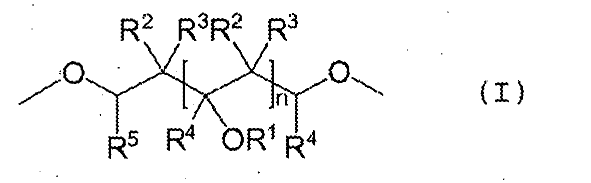 (wherein n, R¹, R², R³, R⁴, and R⁵ are as defined above, respectively).
[9] A softening agent for thermoplastic resins comprising a polyurethane having, in the molecule, a structural unit represented by Formula (II): 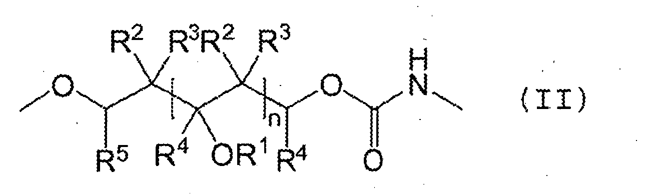 (wherein n, R¹, R², R³, R⁴, and R⁵ are as defined above, respectively).
[10] A softening agent for thermoplastic resins comprising a polyester having, in the molecule, a structural unit represented by Formula (III): 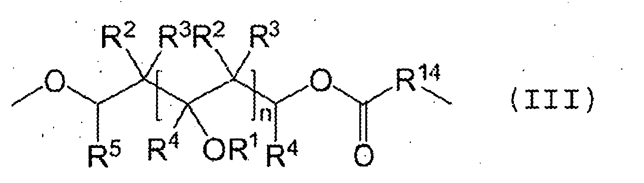 (wherein n, R¹, R², R³, R⁴, R⁵, and R¹⁴ are as defined above, respectively).

Hereinafter, the polymer having, in the molecule, the structural unit represented by Formula (I), the polyurethane having, in the molecule, the structural unit represented by Formula (II), and the polyester having, in the molecule, the structural unit represented by Formula (III) are also referred to as Polymer (I), Polyurethane (II), and Polyester (III), respectively.

In the definition of groups in the above formulae, the lower alkyl includes a straight-chain or branched alkyl groups having 1 to 8 carbon atoms such as methyl, ethyl, propyl, isopropyl, butyl, sec-butyl, tert-butyl, isobutyl, pentyl, isopentyl, neopentyl, hexyl, heptyl, and octyl. The lower alkylene includes the one obtained by removing one hydrogen atom from the above mentioned lower alkyl, and the like.

The cycloalkyl includes cycloalkyl groups having 3 to 10 carbon atoms such as cyclopropyl, cyclobutyl, cyclopentyl, cyclohexyl, cycloheptyl, cyclooctyl, cyclononyl, and cyclodecyl. The cycloalkylene includes the one obtained by removing one hydrogen atom from the above-mentioned cycloalkyl, and the like.

The aryl and the aryl moiety of the aralkyl include aryl having 6 to 14 carbon atoms such as phenyl, naphthyl and anthryl. The alkylene moiety of the aralkyl includes the one obtained by removing one or two hydrogen atoms from the above-mentioned lower alkyl, and the like. Specific examples of the aralkyl include benzyl, phenethyl, phenylpropyl, naphthylmethyl, naphthylethyl, diphenylmethyl and the like. The arylene includes the one obtained by removing one hydrogen atom from the above mentioned aryl, and the like.

As the substitutents in the substituted lower alkyl and the substituted cycloalkyl, examples include lower alkoxy, a halogen atom and the like.

As the substituents in the substituted aryl and the substituted aralkyl, examples include lower alkyl, lower alkoxy, a halogen atom and the like.

In the definition of the substituents, the lower alkyl and the lower alkyl moieties of the lower alkoxy, have the same meanings as the definition of the lower alkyl described above. As the halogen atom, mention may be made of respective atoms of fluorine, chlorine, bromine and iodine.

Among the Polymer (I), Polyurethane (II) and Polyester (III), compounds where R¹ is lower alkyl, and R², R³, R⁴ and R⁵ are the same or different from one another and each represent a hydrogen atom or a lower alkyl are preferable and compounds where R¹ is lower alkyl and R², R³, R⁴ and R⁵ are a hydrogen atom are more preferable.

The respective components of the resin compositions of the present invention will be illustrated below.

### (1) Thermoplastic resins

There is no particular limitation as to the thermoplastic resins, but those having a tensile modulus, determined according to Japanese Industrial Standards (JIS) K 7113, of 150 MPa or more at 23°C are preferable, and those having a tensile modulus of 150 to 5000 MPa at 23°C are more preferable.

Specific examples of the thermoplastic resin include polyolefinic resin such as high-density polyethylene and polypropylene; polystyrenic resin such as polystyrene, AS (acrylonitrile-styrene) resin, and ABS (acrylonitrile-butadiene-styrene) resin; polyacrylic resin such as poly(methyl acrylate); polyester resin such as poly(ethylene terephthalate), poly(butylene terephthalate), and poly(hydroxycarboxylic acid); polycarbonate resin; polyamide resin; and polyacetal resin. Among them, polyolefinic resin, polystyrenic resin, polyester resin, and polycarbonate resin are preferred. Of polyester resins, poly(hydroxycarboxylic acid) are preferred.

As the poly(hydroxycarboxylic acid), for example, poly(lactic acid) or copolymers of lactic acid with other hydroxycarboxylic acid are preferred.

The copolymers of lactic acid and other hydroxycarboxylic acid preferably contain 50 percent by weight or more and more preferably 90 percent by weight or more of lactic acid in the total raw material monomers.

The weight-average molecular weight of the thermoplastic resin is not particularly limited but is preferably 3,000 to 3,000,000, and more preferably 5,000 to 1,000,000.

While the thermoplastic resins may be prepared according to known methods [e.g., Yuki Kagaku Handbook (Handbook of Organic Chemistry), Edited by The Society of Synthetic Organic Chemistry, p.494-538, Gihodo Shuppan Co., Ltd., published on July 10, 1968], it is also possible to purchase commercially available products. One example of the methods for preparing poly(hydroxycarboxylic acid) is specifically explained in detail below.

Examples of the hydroxycarboxylic acid as the raw material of poly(hydroxycarboxylic acid) include lactic acid, glycolic acid, 3-hydroxybutyric acid, 4-hydroxybutyric acid, 4-hydroxyvaleric acid, 5-hydroxyvaleric acid, 6-hydroxycaproic acid and the like.

A hydroxycarboxylic acid as the raw materials for poly'(hydroxycarboxylic acid) may be any of L, D and DL isomers.

Poly(hydroxycarboxylic acid) can be prepared by subjecting a hydroxycarboxylic acid or the corresponding lactide to dehydration condensation or ring-opening polymerization in a manner similar to known methods (e.g., Japanese Published Unexamined Patent Application Nos. 65369/1994 and 168167/1998, PCT International Publications Nos. WO 97/08220, WO 97/12926 and the like).

The melting point of the poly(hydroxycarboxylic acid) thus obtained is preferably 130°C or higher, and more preferably 130°C to 250°C.

### (2) Polymers (I)

The Polymer (I) is preferably a polyol having two to four terminal hydroxyl groups. More preferred examples thereof include a compound represented by Formula (A): 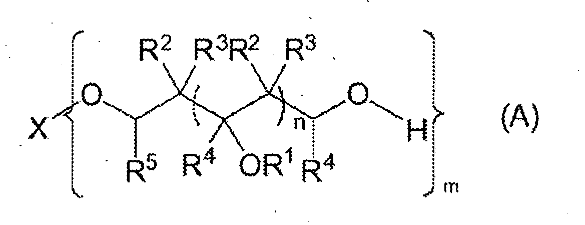 [wherein n, R¹, R², R³, R⁴, and R⁵ are as defined above, respectively; m represents an integer of 1 to 4; X represents a hydrogen atom, a substituted or unsubstituted lower alkylene, -Q¹-A-Q²- (wherein A represents a substituted or unsubstituted cycloalkylene or a substituted or unsubstituted arylene; and Q¹ and Q² are the same or different from each other and each represent a single bond or a substituted or unsubstituted lower alkylene), a substituted or unsubstituted lower alkane triyl, Formula (B): 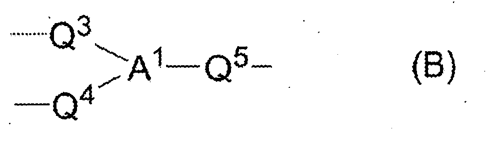 (wherein A¹ represents a substituted or unsubstituted cycloalkane triyl or a substituted or unsubstituted aromatic ring triyl; and Q³, Q⁴, and Q⁵ are the same or different from one another and each represent a single bond or a substituted or unsubstituted lower alkylene), or Formula (C): 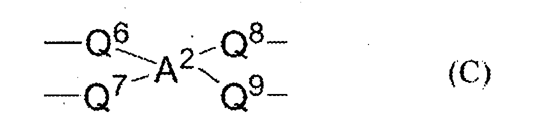 (wherein A² represents a carbon atom, a substituted or unsubstituted alicyclic hydrocarbon tetrayl, or a substituted or unsubstituted aromatic hydrocarbon tetrayl; and Q⁶, Q⁷, Q⁸, and Q⁹ are the same or different from one another and each represent a single bond or a substituted or unsubstituted lower alkylene) and X represents a hydrogen atom when m is 1; X represents one except for hydrogen atom when m is 2 or more; and respective n's may be the same or different from each other when m is 2 or more). Hereinafter, the compound represented by Formula (A) is also referred to as Compound A.

Compound A can be obtained in the following manner. For example, a corresponding alkenyl ether monomer, and if necessary, a cation polymerizable monomer which is copolymerizable therewith are subjected to homopolymerization or copolymerization in the presence of a multifunctional initiator and a Lewis acid according to a known method [e.g., Mitsuo SAWAMOTO, SHINKOUBUNSHI JIKKENGAKU 2 KOUBUNSHI NO GOUSEI/HANNOU (1), (Experiment on polymers: new edition 2; Synthesis and reaction of polymers (1)) p.242-276, edited by the Society of Polymer Science, Japan, KYORITSU SHUPPAN CO., LTD. (1995)], to yield a polyalkenyl ether (copolymer) having two to four terminal acetals. The resulting copolymer is subjected to acid hydrolysis to yield a polyalkenyl ether (copolymer) having two to four terminal formyl groups. Finally, the resulting copolymer is subjected to reduction.

Specific examples of the alkenyl ether monomer include methyl vinyl ether, ethyl vinyl ether, isopropyl vinyl ether, n-butyl vinyl ether, isobutyl vinyl ether, 2-vinyloxyethyl benzoate, 2-acetoxyethyl vinyl ether, 2-ethoxyethyl vinyl ether, diethyl[2-(vinyloxy)ethyl] malonate, 3-tris(ethoxycarbonyl)propyl vinyl ether, 2-vinyloxyethyl cinnamate, cyclohexyl vinyl ether, 4-fluorobutyl vinyl ether, 3-bromobutyl vinyl ether, 4-ethoxybutyl vinyl ether, methylpropenyl ether, ethylpropenyl ether, isopropyl propenyl ether, n-butyl propenyl ether, isobutyl propenyl ether, cyclohexyl propenyl ether, n-propyl vinyl ether, 4-methyl-2-pentyl vinyl ether, n-hexyl vinyl ether, n-heptyl vinyl ether, 3-methyl-1-hexyl vinyl ether, 5-methyl-1-hexyl vinyl ether, 2-ethyl-1-hexyl vinyl ether and the like. These are used alone, or in a mixture of two or more thereof.

The cation polymerizable monomer which is copolymerizable with an alkenyl ether monomer is not specifically limited. Specific and preferred examples thereof include styrene, α-methylstyrene, isobutene, N-vinyl carbazole, p-methoxystyrene, n-nonyl vinyl ether, isononyl vinyl ether, n-decyl vinyl ether, isodecyl vinyl ether, n-undecyl vinyl ether, isoundecyl vinyl ether, n-dodecyl vinyl ether, isododecyl vinyl ether, n-tridecyl vinyl ether, isotridecyl vinyl ether, n-tetradecyl vinyl ether, isotetradecyl vinyl ether, n-pentadecyl vinyl ether, isopentadecyl vinyl ether, n-hexadecyl vinyl ether, isohexadecyl vinyl ether, n-heptadecyl vinyl ether, isoheptadecyl vinyl ether, n-octadecyl vinyl ether, isooctadecyl vinyl ether, n-nonadecyl vinyl ether, isononadecyl vinyl ether, n-eicosyl vinyl ether, isoeicosyl vinyl ether, n-hexadecyl propenyl ether and the like. The amount of the copolymerizable monomers to be used is preferably 50 wt% or less based on the total amount of monomers to be used for polymerization.

As the multifunctional initiator, a compound represented by formula (X): 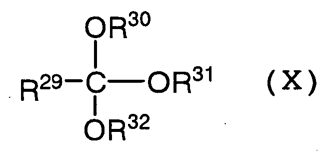 (wherein R²⁹ represents a hydrogen atom, a substituted or unsubstituted lower alkyl, a substituted or unsubstituted cycloalkyl, a substituted or unsubstituted aryl, or a substituted or unsubstituted aralkyl and R³⁰, R³¹ and R³², are the same or different from one another and each represent a substituted or unsubstituted lower alkyl, a substituted or unsubstituted cycloalkyl, a substituted or unsubstituted aryl, or a substituted or unsubstituted aralkyl), a compound represented by formula (IX) 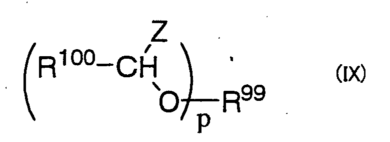 [wherein R⁹⁹ represents a substituted or unsubstituted lower alkylene, -Q¹-A-Q²-(wherein A, Q¹ and Q² have the same' meanings as defined above, respectively), a substituted or unsubstituted lower alkanetriyl, formula (B): 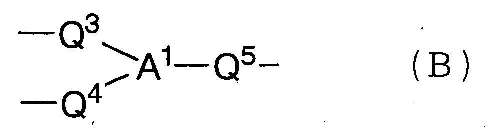 (wherein A¹, Q³, Q⁴, and Q⁵ have the same meanings as defined above, respectively), or formula (C): 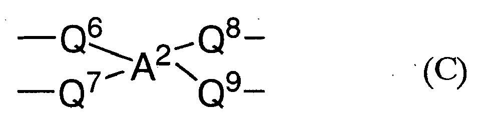 (wherein, A², Q⁶, Q⁷, Q⁸, and Q⁹ are respectively have the same meanings as defined above), R¹⁰⁰ represents a hydrogen atom, a substituted or unsubstituted lower alkyl, a substituted or unsubstituted cycloalkyl, a substituted or unsubstituted aryl, or a substituted or unsubstituted aralkyl, p represents an integer of 2 to 4, and Z represents lower alkanoyloxy, lower alkoxy, hydroxy, or a halogen atom] and the like are used.

In the definition of each group in formula (A), -Q¹-A-Q²-, formula (B), formula (C), formula (X), and formula (IX), a substituted or unsubstituted lower alkyl, a substituted or unsubstituted cycloalkyl, a substituted or unsubstituted aryl, a substituted or unsubstituted aralkyl, a substituted or unsubstituted lower alkylene, a substituted or unsubstituted cycloalkylene, a substituted or unsubstituted arylene and a halogen atom have the same meanings as defined above, respectively. The substituted or unsubstituted lower alkanetriyl include those obtained by removing two hydrogen atoms from the above substituted or unsubstituted lower alkyl, or the like. The substituted or unsubstituted cycloalkanetriyl include those obtained by removing two hydrogen atoms from the above substituted or unsubstituted cycloalkyl, or the like. As the aromatic ring moiety of a substituted or unsubstituted aromatic ring triyl, an aromatic ring having 6 to 14 carbon atoms is mentioned. Specific examples thereof include benzene, naphthalene anthracene and the like. The substituted or unsubstituted alicyclic hydrocarbon tetrayl include those obtained by removing 3 hydrogen atoms from the above substituted or unsubstituted cycloalkyl, or the like. The substituted or unsubstituted aromatic hydrocarbon tetrayl include those obtained by removing 3 hydrogen atoms from the above substituted or unsubstituted aryl, or the like.

Examples of the substituents in a substituted aromatic ring triyl, a substituted alicyclic hydrocarbon tetrayl, and a substituted aromatic hydrocarbon tetrayl include hydroxy, lower alkyl, lower alkoxy, lower alkoxycarbonyl, lower alkanoyl, cinnamoyloxy, aroyloxy, a halogen atom and the like. Although the number of substituents has no particular restriction, it is preferably 1 to 3.

In the definition of each substituent, as the alkyl moieties of lower alkyl, lower alkoxy, lower alkoxycarbonyl, and lower alkanoyl, mention may be made of the same ones as those exemplified in the above definition of the lower alkyl. As the aryl moieties of aroyloxy, mention may be made of the same ones as those exemplified in the above definition of the aryl. As the halogen atoms, mention may be made of the same ones as those mentioned above.

More specific examples of the multifunctional initiator include organic acid, inorganic acid, and alcohol adducts of multifunctional alkenyl ethers.

Examples of the multifunctional alkenyl ether include ethylene glycol divinyl ether, propylene glycol divinyl ether, 1,4-butanediol divinyl ether, 1,6-hexanediol divinyl ether, 1,9-nonanediol divinyl ether, diethylene glycol divinyl ether, glycerin trivinyl ether, trimethylolpropane trivinyl ether, pentaerythritol tetravinyl ether, bisphenol F divinyl ether, bisphenol A divinyl ether, 1,3,5-tris(2-hydroxyethyl)cyanurate trivinyl ether, vinyl ether of phenol resin or novolak resin and the like. As an organic acid to be added to a multifunctional alkenyl ether, examples include formic acid, acetic acid, propionic acid, butanoic acid and the like. As an inorganic acid to be added to a multifunctional alkenyl ether, examples include hydrochloric acid, hydrobromic acid, hydroiodic acid and the like. As the alcohol to be added to a multifunctional alkenyl ether, examples include methanol, ethanol, isopropyl alcohol and the like.

Lewis acids are not specifically limited., but metal halides or complexes thereof (such as diethyl ether complexes, acetic acid complexes, water complexes, and methanol complexes) are preferred, and examples include BCl₃, BF₃, BF₃·O(CH₂CH₃)₂, TiCl₄, SnCl₄, SnBr₄, AlCl₃, SbCl₅, SbF₅, WCl₆, TaCl₅ and the like or complexes thereof. Among these examples, preferred ones are halides of tin, boron, or aluminum (such as BF₃, SnCl₄, and AlCl₃) or complexes thereof and more preferred ones are BF₃(boron trifluoride) or complexes thereof. As the Lewis acid, the metal halaide in which the halogen atom is substituted with lower alkyl, lower alkoxy, phenoxy, or the like may be used. Herein, the lower alkyl and the lower alkoxy have the same meanings as defined above, respectively. The amount of Lewis acid to be used has no particular restriction, and 0.0001 to 3.0 mol per mole of the alkenyl ether monomer is preferable.

For the polymerization reaction, if required, the Lewis base may be added. Examples of Lewis base include ethyl acetate, ethyl chloroacetate, diethyl carbonate, dioxane, tetrahydrofuran, diethyl ether, tetrahydrothiophene 2,6-dimethylpyridine and the like. The amount of the Lewis base to be used has no particular restriction, and is preferably 0.001 to 100 mol per mole of the alkenyl ether monomer.

The polymerization reaction may be carried out in the presence of a solvent. The solvent has no particular restriction so long as it is inert to the reaction. Examples thereof include aromatic hydrocarbons such as benzene and toluene, hydrocarbon halides such as methyl chloride, dichloromethane and 1,2-dichloroethane, nitro compounds such as nitromethane and nitroethane, saturated hydrocarbons such as hexane, heptane, octane and nonane, ethers such as dioxane and tetrahydrofuran and mixed solvents thereof. The amount of the solvent to be used has no particular restriction, and is preferably 0.5 to 100 parts by weight per part by weight of the alkenyl ether monomer.

The temperature of the polymerization reaction is not specifically limited., and is preferably -80 to 100 °C.

The conversion from a polyalkenyl ether (copolymer) having two to four acetals at its ends to a polyalkenyl ether (copolymer) having formyl groups at its 2, 3, or 4 ends by acid hydrolysis can be carried out in accordance with, for example, a known method [Tetrahedron, 43, 825 (1987), J. Org. Chem., 51, 567 (1986), Japanese Published Unexamined Patent Application 11009/2001, and the like]. The final reduction treatment can be carried out by, for' example, a method in which reduction is carried out with hydrogen utilizing a metal catalyst such as Raney nickel, or a method in which reduction is carried out with sodium boron hydride.

The method of acid hydrolysis is preferably a method in which heating with stirring is carried out in a mixed solvent of acetic acid and water.

The number-average molecular weight of Polymers (I) each having two to four terminal hydroxyl groups, such as Compounds A, is preferably 300 to 50,000 and more preferably 500 to 10,000.

Of Compounds A, those in which X is a hydrogen atom; R¹ is ethyl; R², R³, R⁴, and R⁵ are hydrogen atoms; and m is 1 are also available as commercial products [e.g., trade name TOE-2000H from Kyowa Hakko Chemical Co., Ltd.].

Polymers (I) also include following Polyurethanes (II) and Polyesters (III) as preferred embodiments.

### (3) Polyurethanes (II)

Polyurethanes (II) can be prepared, for example, by or in a similar manner to known methods (e.g., U.S. Patent No. 5952437 and the like) using Compound A, and a polyisocyanate compound, and, if necessary, other polyols, a chain extender, and a polymerization terminator (polymerization stop agent) as raw materials.

As the polyisocyanate compound, examples include aromatic polyisocyanates such as diphenylmethane diisocyanate (MDI), 2,4-tolylene diisocyanate (TDI), 2,6-tolylene diisocyanate (TDI), p-phenylene diisocyanate, m-phenylene diisocyanate, 2,4-naphthalene diisocyanate, 1,5-naphthalene diisocyanate, p-xylylene diisocyanate, MDI prepolymer, TDI adduct form and TDI nurate form, alicyclic polyisocyanates such as isophorone diisocyanate (IPDI), 4,4'-diisocyanate dicyclohexane, 4,4'-diisocyanate dicyclohexylmethane and IPDI nurate form, and aliphatic polyisocyanates such as hexamethylene diisocyanate (HDI), HDI nurate form, HDI burette form, tetramethylene diisocyanate, lysine ester diisocyanate, and lysine ester triisocyanate.

The above polyisocyanate compounds can be used alone, or in a mixture of two or more thereof.

As the other polyols, mention may be made of ethylene glycol, propylene glycol, 1,4-butanediol, 1,3-butanediol, 1,5-pentanediol, 1,6-hexanediol, 2-butyl-2-ethyl-1,3-propanediol, 2,4-diethyl-1,5-pentanediol, hydroquinone, dimethylol propionic acid, dimethylol butanoic acid, trimethylolpropane, glycerin, pentaerythritol and the like or polyester polyol obtained by allowing these polyol to react with polybasic acid, polyether polyol such as polytetramethylene ether glycol, polyethylene glycol, and polypropylene glycol, polyolefin polyols such as polybutadiene polyol, hydrogenated polybutadiene polyol, and polyisopurene polyol, polycarbonate ester polyol, polycaprolactone polyol, acryl polyol, and the like. Herein, examples of the polybasic acid include aliphatic dicarboxylic acids or acid anhydrides thereof such as succinic acid, glutaric acid, adipic acid, sebacic acid, fumaric acid, maleic acid, and maleic anhydride, and aromatic dicarboxylic acids such as phthalic acid, isophthalic acid, terephthalic acid, 2,6-naphthalene dicarboxylic acid, dibenzoic acid, 4,4-diphenylene dicarboxylic acid, ethylenebis(p-benzoic acid), 1,4-tetramethylenebis(p-oxybenzoic acid), ethylenebis(p-oxybenzoic acid), and 1,3-trimethylenebis(p- oxybenzoic acid). Whereas, Polyurethane (II) obtainable when a polyol having an acidic group such as dimethylolpropionic acid or dimethylolbutanoic acid is used, can be converted into an aqueous polyurethane resin by neutralizaing the acidic group (such as a carboxy group)by or in a similar manner to known methods (Japanese Published Unexamined Patent Application No. 194836/1993, Japanese Published Unexamined Patent Application No. 27242/1996, Japanese Published Unexamined Patent Application No. 259884/1996, and the like), using an organic base such as ammonia, triethylamine, propylamine, dibutylamine, amylamine, 1-aminooctane, 2-dimethylaminoethanol, ethylaminoethanol, 2-diethylaminoethanol, 1-amino-2-propanol, 2-amino-1-propanol, 3-amino-1-propanol, 1-dimethylamino-2-propanol, 3-dimethylamino-1-propanol, 2-propylaminoethanol, ethoxy propylamine, aminobenzyl alcohol, morpholine, piperidine, or piperazine, or an inorganic base such as sodium hydroxide, potassium hydroxide, sodium carbonate, or potassium carbonate is preferably used in an amount of 0.5 to 1.5 equivalents (molar ratio) based on the amount of the acidic group to neutralize the acidic group.

As the other polyols mentioned above, they may be used alone or in a mixture of two or more thereof.

When the other polyols are used, Compound A is contained therein in an amount of, preferably 5 wt% or more, and more preferably 20 wt% or more based on the total amount of the polyol. However, when a hard one such as acryl polyol or isophthalic acid type polyester polyol is used as the other polyols, Compound A is contained therein in an amount of, preferably 0.5 wt% or more, and more preferably 2 wt% or more based on the total amount of the polyol.

As the chain extenders, low molecular weight polyols, diamines, alkanolamines, hydrazine, and the like are used.

Examples of the low molecular weight polyols include ethylene glycol, propylene glycol, 1,3-butanediol, 1,4-butanediol, 1,5-pentanediol, 1,6-hexanediol, hydroquinone, 2-ethyl-1,3-hexanediol, 2-butyl-2-ethyl-1,3-propanediol, 2,4-diethyl-1,5-pentanediol and the like.

Examples of the diamines include ethylenediamine, propylenediamine, tetramethylenediamine, hexamethylenediamine, isophoronediamine, 1,4-cyclohexanediamine and the like.

Examples of the alkanolamines include diethanolamine triethanolamine and the like.

The above chain extenders may be used alone or in a mixture of two or more thereof.

Examples of the polymerization stop agent includes dialkylamines such as dibutylamine, amines having hydroxyl groups such as monoethanolamine and diethanolamine, monoamine type amino acids such as glycine, alanine, glutamic acid and aminobutyric acid, alcohols such as ethanol and 2-propanol, or mixtures thereof.

The ratio of the number of moles of the isocyanate group to the total number of moles of the hydroxyl group and the amino group in the raw material is preferably 0.1 to 10, further preferably 0.5 to 3, and more preferably 0.8 to 2.

The reaction temperature is preferably 0 to 300 °C.

For the production of Polyurethane (II), if required, a solvent may be used. Examples of the solvents include ketones such as acetone, methyl ethyl ketone, and methyl isobutyl ketone, ethers such as tetrahydrofuran, aromatic hydrocarbons such as benzene, toluene, and xylene, and esters such as ethyl acetate and butyl acetate. When diamines are used as chain extenders, alcohols such as methanol, ethanol, 2-propanol, and 1-butanol can also be used. These solvents are each preferably used in an amount of 0.5 to 100 parts by weight per part by weight of the raw materials for Polyurethane (II).

Further, for the production of Polyurethane (II), if required, organometal catalysts such as tin octylate, tetrabutoxytitanium, di-n-butyl tin dilaurate, and dioctyltin dilaurate, catalysts of tertiary amines such as triethylene diamine, and the like may be used. In general, the amount to be used thereof is preferably 0.001 to 5 wt% based on the amount of the raw material for Polyurethane (II).

The weight-average molecular weight of Polyurethanes (II) is not specifically limited but is preferably 1,000 to 50,000,000, more preferably 10,000 to 20,000,000, and further preferably 30,000 to 3,000,000.

Compositions comprising a Polyurethane (II) specifically having the above weight-average molecular weight and a thermoplastic resin show better quality typically in optical transparency, flexibility, strength, elongation, adhesion, adherence, weather resistance, water resistance, thermal aging resistance and the like.

Compositions comprising a thermoplastic resin and Polyurethane (II), and softening agents for thermoplastic resins comprising Polyurethane (II) may further comprise conventional additives, if necessary, such as phenolic antioxidants, sulfur antioxidants, phosphorus antioxidants, ultraviolet absorbing agents such as benzotriazole ultraviolet absorbing agents, hindered amine light stabilizers, antistatic agents, inorganic colloid sol such as colloidal silica or colloidal alumina, silane coupling agents, colorants, wax agents, antiblocking agents, antiseptic agents, antifoaming agents, plasticizers, lubricants, catalysts, viscosity modifiers, leveling agents, anti-gelling agents, fillers, solvents, film-forming aids, dispersants, thickeners, and flavors. These additives may be added during the production of Polyurethanes (II).

These antioxidants are each used in an amount of 0.001 to 10 parts by weight, and' more preferably 0.05 to 5 parts by weight per 100 parts by weight of Polyurethane (II).

The ultraviolet absorbing agent or the hindered amine light stabilizer are each used in an amount of 0.001 to 30 parts by weight, and more preferably 0.05 to 10 parts by weight per 100 parts by weight of Polyurethane (II).

### (4) Polyester (III)

Polyester (III) can be produced, for example, using Compound A, a polybasic acid, and if required, other polyols, an animal or vegetable oil fatty acid, an animal or vegetable oil, and the like as raw materials by or in a similar manner to known methods (U.S. Patent No. 6143840, and the like). The amount of the polybasic acid to be used is preferably 10 to 80 wt%, and more preferably 25 to 60 wt% based on the total amount of the raw materials. The amount of the alcohol components (Compound A and the other polyols) to be used is preferably 10 to 80 wt%, and more preferably 25 to 60 wt% based on the total amount of the raw materials.

The ratio of the number of moles of the hydroxyl group to the number of moles of the carboxyl group in the raw materials is preferably 0.8 to 1.5, and more preferably 0.9 to 1.3.

As the polybasic acid, mention may be made of the similar ones as those mentioned in the description of (3).

As the other polyol, mention may be made of the similar ones as those mentioned in the description of (3). When the other polyol is used, it is preferable to contain Compound A in an amount of 5 % (molar ratio) or more, and more preferably 20 % (molar ratio) or more based on the amount of the alcohol components in the raw materials.

Examples of the animal or vegetable oil fatty acid include soybean' oil fatty acid, safflower oil fatty acid, tall oil fatty acid, linseed oil fatty acid, dehydrated castor oil fatty acid, tung oil fatty acid and the like.

Examples of the animal or vegetable oil include soybean oil, safflower oil, linseed oil, dehydrated castor oil, tung oil and the like.

When the animal or vegetable oil fatty acid or the animal or vegetable oil is used, each is preferably used in an amount of 20 wt% or less based on the total amount of the raw materials.

For the production of Polyester (III), if required, a solvent may be used. Examples of the solvents include those mentioned in the above (3).

The weight-average molecular weight of Polyester (III) is not specifically limited but is preferably 1,000 to 50,000,000, further preferably 10,000 to 20,000,000, and more preferably 30,000 to 3,000,000.

Compositions comprising a Polyester (III) which specifically have the above-specified weight-average molecular weight and a thermoplastic resin are excellent in optical transparency, flexibility, strength, elongation, adhesion, adherence, weather resistance, water resistance, thermal aging resistance and the like.

Compositions comprising a Polyester (III) and a thermoplastic resin and softening agents for thermoplastic resins comprising Polyester (III) may further comprise conventional additives, if necessary, such as phenolic antioxidants, sulfur antioxidants, phosphorus antioxidants, ultraviolet absorbing agents such as benzotriazole ultraviolet absorbing agents, hindered amine light stabilizers, antistatic agents, inorganic colloid sol such as colloidal silica or colloidal alumina, silane coupling agents, colorants, wax agents, antiblocking agents, antiseptic agents, antifoaming agents, plasticizers, lubricants, catalysts, viscosity modifiers, leveling agents, anti-gelling agents, fillers, solvents, film-forming aids, dispersants, thickeners, and flavors. These additives may be added during the production of Polyester (III).

These antioxidant are each used in an amount of 0.001 to 10 parts by weight, and more preferably 0.05 to 5 parts by weight per 100 parts by weight of Polyester (III).

The amount of the ultraviolet absorbing agent or hindered amine light stabilizer is preferably 0.001 to 30 parts by weight, and more preferably 0.05 to 10 parts by weight to 100 parts by weight of Polyester (III).

Next, the resin compositions of the present invention will be illustrated below.

The resin compositions of the present invention each comprise a thermoplastic resin and Polymer (I).

The amount of Polymer (I) to be used in the resin composition of the present invention is preferably 1 to 50 percent by weight and more preferably 2 to 30 percent by weight based on the total weight of the composition.

The resin compositions of the present invention are not specifically limited, but can be prepared in a similar manner to known methods (e.g., Practical Polymer Alloy, p. 21, Agne Shofu Publishing Inc., published on October 20, 1993).

More specifically, they can be prepared, for example, by adding Polymer (I) to a thermoplastic resin and admixing them with heating, preferably at 150°C to 250°C, typically using an open roll mill, an internal mixer, or an extruder-mixer. In this procedure, a thermoplastic resin can be added to and admixed with Polymer (I) instead of adding Polymer (I) to the thermoplastic resin. The order of addition of Polymer (I) and the thermoplastic resin is not specifically limited.

The resin compositions of the present invention can also be prepared upon the polymerization of a polyurethane, for example, by heating and kneading a thermoplastic resin, Polymer (I) having two to four terminal hydroxyl groups, a polyisocyanate compound and, if necessary, other polyols and a chain extender in an internal mixer. Likewise, the compositions can also be produced upon the polymerization of a polyurethane by feeding a thermoplastic resin, a polyisocyanate compound, Polymer (I) having two to four terminal hydroxyl groups and, if necessary, other polyols and a chain extender simultaneously or separately to a mixer-extruder, and heating and kneading them in the mixer. As the polyisocyanate compound(s), mention may be made of the same one(s) as those described in (3).

The resin compositions of the present invention can be used, for example, in applications such as sheets, films, plates, tubular molded articles, packaging plastics, hoses, wire coverings, food trays, food containers, and injection-molded articles by carrying out thermal molding processing, or by applying or laminating it after dissolving it in a solvent in a manner similar to known methods [e.g., Plastic Seikei Kako Nyumon (Introduction to Plastic Molding Processing), p.59-78, Nikkan Kogyo Shimbun, Ltd., published on March 1, 1982].

When the thermoplastic resin used in the resin compositions of the present invention is a polystyrene resin, a polyester resin, or a polycarbonate resin, the resin compositions of the present invention may further comprise, if necessary, additives such as pigments, conductivity imparting agents, antistatic agents, dyes, antioxidants, anti-photoaging agents, lubricants, and fungicides. The content of such additives is not specifically limited but is preferably 0.01 to 5.0 percent by weight based on the total weight of the composition.

The resin compositions of the present invention are excellent typically in optical transparency, flexibility, strength, elongation, adhesion, adherence, weather resistance, water resistance, thermal aging resistance, and impact resistance and are substantially free from bleeding and fogging.

Polymers (I) are useful as softening agents for thermoplastic resins. When they are used as softening agents for thermoplastic resins, they can be used under similar conditions as specified in the description of the resin compositions of the present invention.

### Best Mode for Carrying Out the Invention

The present invention will be illustrated in further detail with reference to the following examples, reference examples, comparative example, and test examples.

### <Determination of weight-average molecular weight of poly(lactic acid) obtained in Reference Example 1>

The weight-average molecular weight of the poly(lactic acid) obtained in Reference Example 1 was measured by gel permeation chromatography according to the following method:
Detection method: RI (differential refractive index)
Column: TOSOH G-5000, TOSOH G-3000, and TOSOH G-1000 (products of Tosoh Corporation) were connected in series.
Column oven: 40°C
Eluent: Chloroform
Internal standard substance: Polystyrene

### <Determination of weight-average molecular weight, number-average molecular weight, and molecular weight distribution of poly(isobutyl vinyl ether) obtained in Reference Example 2>

The weight-average molecular weight, number-average molecular weight, and molecular weight distribution of the poly(isobutyl vinyl ether) obtained in Reference Example 2 were measured by gel permeation chromatography according to the following method:
Detection method: RI
Column: TSK gel Super HM-L, TSK gel Super HM-M, and TSK gel Super HM-N (products of Tosoh Corporation) were connected in series.
Column oven: 40°C
Eluent: Tetrahydrofuran
Internal standard substance: Polystyrene

### <Determination of weight-average molecular weight, number-average molecular weight, and molecular weight distribution of polymers obtained in Reference Examples 3 to 5>

The weight-average molecular weight, number-average molecular weight, and molecular weight distribution of the polymers obtained in Reference Examples 3 to 5 were measured by gel permeation chromatography according to the following method:
Detection method: RI
Column: TSK gel Super HM-M (two columns) and TSK gel Super HM-H (products of Tosoh Corporation) were connected in series.
Column oven: 40°C
Eluent: Tetrahydrofuran
Internal standard substance: Polystyrene

### [Reference Example 1] Production of poly(lactic acid)

A 90 percent by weight aqueous L-lactic acid solution (product of Wako Pure Chemical Industries, Ltd.) (1010.0 g) was placed in a reactor provided with a stirrer, a Liebig condenser, and a nitrogen lead-in tube. After nitrogen substitution was conducted, the temperature was raised to 150°C while gradually reducing the pressure. The pressure was further reduced finally to 133 Pa. A mixture mainly containing lactic acid and a lactic acid oligomer (525.2 g) (yield: 52%) that distilled out to an ice-cooled receiver was obtained.

The thus-obtained mixture mainly containing lactic acid and a lactic acid oligomer was dissolved in acetone and the acid value was measured. As a result, the degree of polymerization of lactic acid in the mixture was about 1.20. The mixture mainly containing lactic acid and a lactic acid oligomer (500.0 g) was stirred at 140°C for five hours under nitrogenous airflow to yield 417.0 g of a lactic acid oligomer. The acid value was measured by the above procedure to determine the degree of polymerization, which was 3.41.

To 400 g of this oligomer, 8 g of synthetic aluminum silicate (Tomita Pharmaceutical Co., Ltd.) was added and the temperature was raised to 200°C and the pressure was gradually reduced to 2220 Pa over thirty minutes. After stirring the mixture at 200±5°C for one hour, the pressure was gradually reduced to 133 Pa and the mixture was further stirred at 200±5°C for nine hours. The mixture was cooled to room temperature to yield about 200 g of a solidified, milky-white poly(lactic acid). The resulting poly(lactic acid) has a weight-average molecular weight of 83,000. [Reference Example 2] Production of poly(isobutyl vinyl ether) having terminal hydroxyl groups (Compound A in which R¹ is isobutyl; and R², R³, R⁴ and R⁵ are hydrogen atoms)

In a 1-liter glass flask, 25.3 g of ethyl orthoformate, 250 g of toluene, and 0.13 g of boron trifluoride diethyl ether complex were placed. Isobutyl vinyl ether (344 g) was added to the resulting solution while stirring at 20°C. Polymerization initiated upon the addition of isobutyl vinyl ether. After the completion of addition, the reaction mixture was washed with aqueous sodium hydroxide solution and distilled water, and the solvent was distilled off to thereby yield 355 g of a poly(isobutyl vinyl ether) having acetals at both ends. In a 2-liter glass flask, 350 g of the above-prepared poly(isobutyl vinyl ether) having acetals at both ends, 420 g of acetic acid, and 245 g of water were placed, followed by stirring at 60°C for three hours. The reaction mixture was neutralized with a saturated aqueous sodium bicarbonate solution, extracted with ethyl acetate, and ethyl acetate was distilled off to thereby yield 310 g of a poly(isobutyl vinyl ether) having formyl groups at both ends. In a 1-liter stainless steel (SUS) autoclave, 130 g of the poly(isobutyl vinyl ether) having formyl groups at both ends, 420 g of ethanol, and 19.5 g of Raney nickel were placed, followed by introduction of hydrogen gas (1961 kPa). The mixture in the autoclave was heated to 80°C and stirred for four hours. After the reaction, the Raney nickel was removed by filtration and the solvent was distilled off to thereby yield 111 g of a poly(isobutyl vinyl ether) having hydroxyl groups at both ends.

The molecular properties of the resulting poly(isobutyl vinyl ether) having hydroxyl groups at both ends are shown in Table-1.

**Table-1**

| Hydroxyl value (mgKOH/g) | Moisture content (ppm) | Number-average molecular weight | Molecular weight distribution Mw/Mn |
|---|---|---|---|
| 58.2 | 75 | 2,250 | 1.23 |

### [Reference Example 3] Production of polyurethane using poly(ethyl vinyl ether) having terminal hydroxyl groups (TOE-2000H)

TOE-2000H [Kyowa Hakko Kogyo Co., Ltd.; hydroxyl value of 73.2] (459.8 g; 0.3 mol) heated at 130°C was combined with 75.1 g (0.3 mol) of MDI [Sumika Bayer Urethane Co., Ltd.; Sumidule S) heated at 100°C. The resulting mixture was vigorously stirred for five minutes to yield a polyurethane polymer. After aging at 80°C for one week, the polymer was subjected to analysis using
ahttp://www6.big.or.jp/~beyond/bbsnews/2ch/top/mnewsplus.htm 1 Fourier transform infrared spectrometer system 2000 (PerkinElmer, Inc.) (hereinafter briefly referred to as FT-IR) to find that the polymer shows no absorption derived from isocyanate group. The polymer had a weight-average molecular weight of 69,000. This polymer will be referred to as Polyurethane A.

### [Reference Example 4] Production of polyurethane using poly(isobutyl vinyl ether) having terminal hydroxyl groups

The poly(isobutyl vinyl ether) having terminal hydroxyl groups obtained in Reference Example 2 (385.6 g; 0.2 mol)was heated at 130°C and admixed with 44.5 g (0.2 mol) of isophorone diisocyanate heated at 100°C and 0.2 g (500 ppm to the total weight of raw materials) of di-n-butyltin dilaurate. The resulting mixture was vigorously stirred for five minutes to yield a polyurethane polymer. After aging at 80°C for one week, the polymer was subjected to FT-IR analysis to find that the polymer shows no absorption derived from isocyanate group. The polymer had a weight-average molecular weight of 58,000. This polymer will be referred to as Polyurethane B.

### [Reference Example 5] Production of poly(isobutyl vinyl ether)

A dichloromethane solution (6 L) containing 5 mol (500.8 g) of isobutyl vinyl ether and 5 mmol of isobutoxyethyl chloride was prepared in a reactor equipped with a three-way stopcock. To this monomer solution, 500 ml of a dichloromethane solution containing 25 mmol of SnCl₄ and 40 mmol of tetra-n-butyl ammonium chloride was added at - 15°C, and the mixture was sufficiently stirred. After stirring for fifty minutes, 2 liters of methanol was added to the polymerization solution to terminate the polymerization. The solution was diluted with hexane and washed with an aqueous hydrochloric acid solution, an aqueous sodium hydroxide solution, and water in this order, and the solvent was distilled off to yield about 490 g of a poly(isobutyl vinyl ether). The rate of polymerization of isobutyl vinyl ether at that time was 98% and the obtained polyisobutyl vinyl ether had a weight-average molecular weight (Mw) of 140,000, a number-average molecular weight (Mn) of 100,000, and a molecular weight distribution, Mw/Mn, of 1.40.

### Example 1

The poly(lactic acid) obtained in Reference Example 1 (51.0 g) and 9.0 g of Polyurethane A obtained in Reference Example 3 were kneaded and compounded using a Labo Plastomill (Toyo Seiki Seisaku-sho, Ltd.) at 190°C. This product was hot-pressed at 190°C and thereby yielded a sheet 2 mm thick. The resulting sheet was transparent and colorless.

### Example 2

A sheet 2 mm thick was molded by the procedure of Example 1, using 51.0 g of the poly(lactic acid) obtained in Reference Example 1 and 9.0 g of Polyurethane B obtained in Reference Example 4. The resulting sheet was transparent and colorless.

### Example 3

The poly(lactic acid) obtained in Reference Example 1 (51.0 g), 7.7 g of TOE-2000H [Kyowa Hakko Kogyo Co., Ltd., hydroxyl value of 73.2], and 1.3 g of MDI [Sumika Bayer Urethane Co., Ltd., Sumidule S] were kneaded and compounded using a Labo Plastomill (Toyo Seiki Seisaku-sho, Ltd.) at 190°C. After aging at 80°C for one week, the composition was subjected to FT-IR analysis to find that there was no absorption derived from isocyanate group. The composition was hot-pressed at 190°C and thereby yielded a sheet 2 mm thick. The resulting sheet was transparent and colorless.

### Example 4

The poly(lactic acid) obtained in Reference Example 1 (40.5 g), 4.0 g of TOE-2000H [Kyowa Hakko Kogyo Co., Ltd., hydroxyl value of 73.2], and 0.6 g of IPDI [Sumika Bayer Urethane Co., Ltd., Sumidule I] were kneaded and compounded using a Labo Plastomill (Toyo Seiki Seisaku-sho, Ltd.) at 200°C. After aging at 80°C for three days, the composition was subjected to FT-IR analysis to find that there was no absorption derived from isocyanate group. The composition was hot-pressed at 190°C and thereby yielded a sheet 2 mm thick. The resulting sheet was transparent and colorless.

### Example 5

The poly(lactic acid) obtained in Reference Example 1 (40.5 g), 4.1 g of TOE-2000H [Kyowa Hakko Kogyo Co., Ltd., hydroxyl value of 73.2], 0.5 g of IPDI [Sumika Bayer Urethane Co., Ltd., Sumidule I], and 0.2 g of hexamethylene diisocyanurate [Mitsui Takeda Chemicals, Inc., Takenate D170N] were kneaded and compounded using a Labo Plastomill (Toyo Seiki Seisaku-sho, Ltd.) at 200°C. After aging at 80°C for three days, the composition was subjected to FT-IR analysis to find that there was no absorption derived from isocyanate group. The composition was hot-pressed at 190°C and thereby yielded a sheet 2 mm thick. The resulting sheet was transparent and colorless.

### Example 6

To a co-rotating twin-screw extruder-mixer PCM-30 (Ikegai Corporation; ratio of cylinder length L to cylinder diameter D of 42, equipped with strand die), the poly(lactic acid) obtained in Reference Example 1, TOE-2000H [Kyowa Hakko Kogyo Co., Ltd., hydroxyl value of 73.2], and MDI [Sumika Bayer Urethane Co., Ltd., Sumidule S] was fed at rates of 6.80 kg per hour, 1.03 kg per hour, and 0.17 kg per hour, respectively. The cylinder temperature of the extruder was set at 180°C, and the screw rotation speed was set at 80 rpm. The strand was cooled in a water bath, cut by using a pelletizer and thereby yielded about 10 kg of compounded pellets. After aging at 80°C for one week, the pellets were subjected to FT-IR analysis to find that there was no absorption derived from isocyanate group. A sheet 1 mm thick was formed from the pellets by using a sheet extruder (IKG Co., Ltd.). The resulting sheet was transparent and colorless.

### Example 7

To a co-rotating twin-screw extruder-mixer PCM-30 (Ikegai Corporation; ratio of cylinder length L to cylinder diameter D of 42, equipped with strand die), the poly(lactic acid) obtained in Reference Example 1, TOE-2000H [Kyowa Hakko Kogyo Co., Ltd., hydroxyl value of 73.2], IPDI [Sumika Bayer Urethane Co., Ltd., Sumidule I], and hexamethylene diisocyanurate [Mitsui Takeda Chemicals, Inc., Takenate D170N] were fed at rates of 6.80 kg per hour, 0.68 kg per hour, 0.08 kg per hour, and 0.03 kg per hour, respectively. The cylinder temperature of the extruder was set at 190°C, and the screw rotation speed was set at 80 rpm. The strand was cooled in a water bath, cut by using a pelletizer and thereby yielded about 10 kg of compounded pellets. After aging at 80°C for one week, the pellets were subjected to FT-IR analysis to find that there was no absorption derived from isocyanate group. A sheet 1 mm thick was molded from the pellets by using a sheet extruder (IKG Co., Ltd.). The resulting sheet was transparent and colorless.

### [Comparative Example 1]

The poly(lactic acid) obtained in Reference Example 1 (51.0 g) and 9.0 g of the poly(isobutyl vinyl ether) obtained in Reference Example 5 were kneaded and compounded using a Labo Plastomill (Toyo Seiki Seisaku-sho, Ltd.) at 190°C. The compounded product was hot-pressed at 190°C and thereby yielded a sheet 2 mm thick. The resulting sheet was transparent and colorless.

### [Test Example 1]

Tensile tests were conducted in accordance with JIS K 7113 using the sheets obtained in Examples 1 to 7 and Comparative Example 1. In the tensile tests, the Autograph AG5KN (Shimadzu Corporation) and No. 2 test piece as a test piece were used and the rate of pulling was set at 50 mm per minute. The results are shown in Table-2.

**Table-2**

| | Example 1 | Example 2 | Example 3 | Example 4 | Example 5 | Example 6 | Example 7 | Com. Ex. 1 |
|---|---|---|---|---|---|---|---|---|
| Tensile elongation (%) | 150 | 110 | 170 | 59 | 67 | 170 | 70 | 21 |

These results show that the sheets obtained in Examples 1 to 7 are excellent in tensile elongation and, are excellent in flexibility as compared with the sheet obtained in Comparative Example 1.

### [Test Example 2]

The sheets obtained in Examples 1 to 7 were left stand in a oven with internal air circulation at 50°C for one month, and the development of bleeding matter and weight loss were examined in each sheet. As a result, all of the sheets obtained in Examples 1 to 7 showed neither development of bleeding matter nor weight loss. This indicates that these sheets have excellent properties of being free from bleeding and fogging even in a long-term use.

### Industrial Applicability

The present invention provides the resin compositions useful in applications such as sheets, films, plates, tubular molded articles, packaging plastics, hoses, wire coverings, food trays, food containers, and injection-molded articles.

## Claims

1. A resin composition comprising a thermoplastic resin and a polymer having, in the molecule, a structural unit represented by Formula (I): 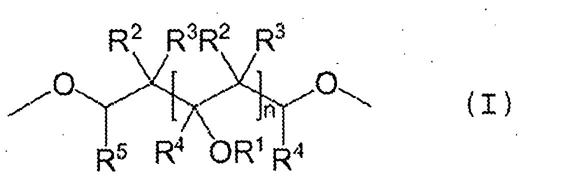 (wherein n represents an integer of 2 to 1000; R¹ represents a substituted or unsubstituted lower alkyl, a substituted or unsubstituted cycloalkyl, a substituted or unsubstituted aryl, or a substituted or unsubstituted aralkyl; and R², R³, R⁴, and R⁵ are the same or different from one another and each represent a hydrogen atom, a substituted or unsubstituted lower alkyl, a substituted or unsubstituted cycloalkyl, a substituted or unsubstituted aryl, or a substituted or unsubstituted aralkyl, and when each of R¹s, R²s, R³s, and R⁴s, represent two or more in number, they may be the same or different from each other, respectively).

2. The resin composition according to claim 1, wherein the polymer having the structural unit represented by Formula (I) comprises two to four terminal hydroxyl groups and has a number-average molecular weight of 300 to 50,000.

3. A resin composition comprising a thermoplastic resin and a polyurethane having, in the molecule, a structural unit represented by Formula (II): 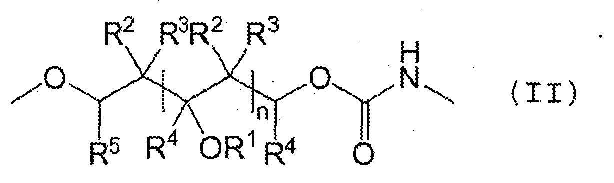 (wherein n, R¹, R², R³, R⁴, and R⁵ are as defined above, respectively).

4. The resin composition according to claim 3, wherein the polyurethane having, in the molecule, the structural unit represented by Formula (II) has a weight-average molecular weight of 1,000 to 50,000,000.

5. A resin composition comprising a thermoplastic resin and a polyester having, in the molecule, a structural unit represented by Formula (III): 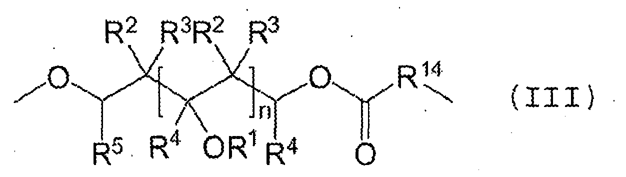 (wherein n, R¹, R², R³, R⁴, and R⁵ are as defined above, respectively; and R¹⁴ represents a substituted or unsubstituted lower alkylene, a substituted or unsubstituted cycloalkylene, or a substituted or unsubstituted arylene).

6. The resin composition according to claim 5, wherein the polyester having, in the molecule, the structural unit represented by Formula (III) has a weight-average molecular weight of 1,000 to 50,000,000.

7. The resin composition according to any one of claims 1 to 6, wherein the thermoplastic resin is a poly(lactic acid).

8. A softening agent for thermoplastic resins comprising a polymer having, in the molecule, a structural unit represented by Formula (I): 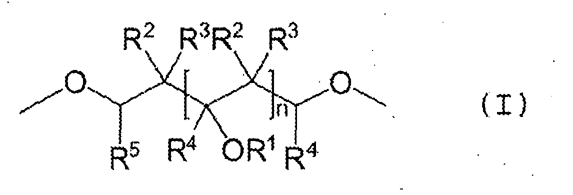 (wherein n, R¹, R², R³, R⁴, and R⁵ are as defined above, respectively).

9. A softening agent for thermoplastic resins comprising a polyurethane having, in the molecule, a structural unit represented by Formula (II): 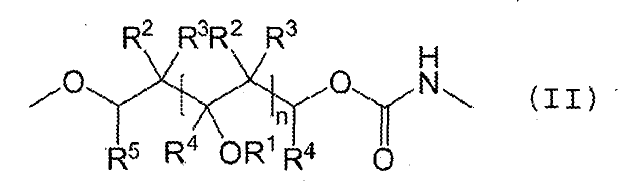 (wherein n, R¹, R², R³, R⁴, and R⁵ are as defined above, respectively).

10. A softening agent for thermoplastic resins comprising a polyester having, in the molecule, a structural unit represented by Formula (III): 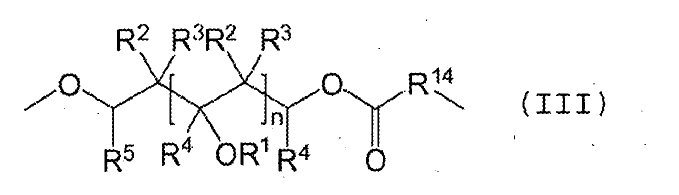 (wherein n, R¹, R², R³, R⁴, R⁵, and R¹⁴ are as defined above, respectively).
